# EUROPÄISCHE PATENTSCHRIFT

(11) **EP 2 886 272 B1**
(45) Veröffentlichungstag und Bekanntmachung des Hinweises auf die Patenterteilung: **19.06.2019**
(21) Anmeldenummer: 14198218.1
(22) Anmeldetag: 16.12.2014
(51) Int. Cl.: B27D 5/00, B23C 3/12, B27G 13/00, B23Q 35/10

(54) **Vorrichtung und Verfahren zum Bearbeiten eines Werkstücks**
Device and Method to handle a workpiece
Dispositif et méthode de traitement d'une pièce

(30) Priorität: 17.12.2013 DE 102013226214
(43) Veröffentlichungstag der Anmeldung: 24.06.2015
(73) Patentinhaber: HOMAG GmbH, 72296 Schopfloch (DE)
(72) Erfinder: Kalmbach, Wilhelm, 72296 Schopfloch (DE)
(74) Vertreter: Hoffmann Eitle

(56) Entgegenhaltungen:
- EP-A1- 2 363 259
- EP-A2- 2 492 071
- DE-A1- 4 419 324
- DE-A1-102013 010 359

## Beschreibung

### TECHNISCHES GEBIET

Die vorliegende Erfindung bezieht sich auf eine Vorrichtung zum Bearbeiten eines Werkstücks, gemäß dem Oberbegriff des Anspruchs 1 und auf ein Verfahren zum Bearbeiten eines Werkstücks gemäß dem Anspruch 10. Eine solche Vorrichtung und ein solches Verfahren sind bekannt aus dem Dokument EP2492071A2.

### STAND DER TECHNIK

Im Bereich der Möbel- und Bauelementeindustrie werden an die Schmalseiten von Werkstückplatten, z.B. Massivholz- oder Spanplatten, Leichtbauplatten, Sandwichplatten oder dergleichen, Kanten bzw. Schmalflächenbeschichtungsbänder angeleimt. Diese angeleimten Kanten werden sowohl an ihrer Ober- und Unterseite, als auch an der vorderen und hinteren Stirnseite des Werkstücks bündig zur jeweils anliegenden Werkstückoberfläche gefräst. Ferner werden an den Kanten verschiedene Konturen, z.B. Fasen oder Radien, vorgesehen.

Der Anmelderin sind dabei lediglich Vorrichtungen und Verfahren bekannt, bei denen in einer ersten Bearbeitungsstation die Bündigfräsbearbeitung erfolgt und die Kante in einer weiteren Bearbeitungsstation, die örtlich getrennt von der ersten Bearbeitungsstation angeordnet ist, mit unterschiedlichen Konturen versehen wird.

Die Bearbeitungsstation zum Bündigfräsen kann dabei gemäß der in der EP 2 181 816 A1 offenbarten Vorrichtung ausgestaltet sein.

Die davon örtlich getrennte Bearbeitungsstation zum Konturbearbeiten der Werkstückkante kann in Anlehnung an die in der DE 199 15 672 C2 offenbarte Vorrichtung ausgebildet sein. Diese Vorrichtung weist zwei Fräswerkzeuge zur Konturbearbeitung einer Werkstückkante auf, welche über eine relative Verstellbewegung jeweils mit einer zu bearbeitenden Kante in Eingriff bringbar sind.

Die Vorrichtungen und Verfahren im Stand der Technik weisen jedoch die Nachteile hoher System- und Betriebskosten sowie eines hohen erforderlichen Platzbedarfs auf.

Als weiteres Dokument ist die EP 2 363 259 A1 bekannt, die eine Fräsvorrichtung mit zwei Fräswerkzeugen zeigt.

Das Dokument DE 44 19 324 A1 betrifft eine Vorrichtung zum Bearbeiten von Holz, wobei das Werkzeug mindestens zwei Eckfräser umfasst, die relativ zueinander über eine Steuereinheit mittels zumindest einer Verstelleinheit verstellbar sind. Jeder der Eckfräser ist an seiner unteren radialen Stirnfläche mit Hobelmessern versehen, während die Umfangsfläche mit Hackmessern versehen ist.

### DARSTELLUNG DER ERFINDUNG

Es ist daher Aufgabe der vorliegenden Erfindung, eine Vorrichtung und ein Verfahren zur Bearbeitung einer an ein Werkstück angebrachten Kante bereitzustellen, die/das geringe Investitions- und Betriebskosten sowie einen geringen Platzbedarf aufweist.

Der Erfindung liegt der Gedanke zugrunde, dass die hohen System- und Betriebskosten sowie der hohe Platzbedarf der Vorrichtungen im Stand der Technik dadurch begründet ist, dass diese für die vollständige Kantenbearbeitung einer an ein Werkstück angebrachten Kante mindestens zwei Fräsaggregate, nämlich ein erstes Aggregat zum Bündigfräsen und ein weiteres Aggregat zur Konturbearbeitung benötigen. Diese jeweils kostenintensiven Bearbeitungsaggregate führen zu den hohen Systemkosten der Gesamtvorrichtung und begründen die hohen Betriebskosten, da Energie und Betriebsmittel für zwei Bearbeitungsaggregate bereitgestellt werden müssen. Ferner führt die Ausgestaltung im Stand der Technik zu einem hohen Platzbedarf der Vorrichtung, da ein Bearbeitungsraum für zwei Aggregate bereitgestellt werden muss.

Die vorliegende Erfindung stellt eine Vorrichtung gemäß Anspruch 1 und eine Verfahren gemäß Anspruch 10 bereit, mit der die unterschiedlichen Kantenbearbeitungen, also die Kontur- und Bündigfräsbearbeitung, mit einem Bearbeitungsaggregat durchführbar ist. Dafür weist die Vorrichtung ein erstes Fräswerkzeug für eine Konturbearbeitung einer an ein Werkstück angebrachten Kante, ein zweites Fräswerkzeug für eine Konturbearbeitung einer an das Werkstück angebrachten Kante, welches gegenüber dem ersten Fräswerkzeug zwischen einer Ruhestellung, in der das erste Fräswerkzeug mit dem Werkstück in Eingriff bringbar ist, und einer Bearbeitungsstellung, in der das zweite Fräswerkzeug mit dem Werkstück in Eingriff bringbar ist, verstellbar ist, auf. Gekennzeichnet ist die Vorrichtung dadurch, dass diese ferner ein drittes Fräswerkzeug zum Bündigfräsen einer Schmalseite einer an das Werkstück angebrachten Kante aufweist, wobei die drei Fräswerkzeuge koaxial zueinander angeordnet und gemeinsam über eine Einrichtung antreibbar sind. Hier sei darauf hingewiesen, dass es sich bei dem ersten und zweiten Fräswerkzeug um ein Werkzeug zum Erzeugung eines Radius, ein Werkzeug zum Erzeugen einer Fase oder dergleichen handeln kann. Auch ein Werkzeug, das sowohl eine Fase, als auch eine Radiusbearbeitung ermöglicht ist denkbar.

Mit der erfindungsgemäßen Vorrichtung ist es möglich, eine an ein Werkstück angebrachte Kante vollständig mit lediglich einem Bearbeitungsaggregat zu bearbeiten. Dabei stellt die erfindungsgemäße Vorrichtung auf diesem einen Aggregat mindestens zwei, bevorzugt verschiedene, Konturbearbeitungen sowie eine Bündigfräsbearbeitung bereit. Die Vorrichtung weist daher einen geringen Platzbedarf auf, da lediglich ein Bearbeitungsraum für ein Bearbeitungsaggregat bereitgestellt werden muss. Ferner erzielt die erfindungsgemäße Vorrichtung geringe System- und Betriebskosten, da lediglich ein Bearbeitungsaggregat bereitgestellt und betrieben werden muss.

Das dritte Fräswerkzeug weist dabei bevorzugt eine Umfangsfläche mit einem konstanten Durchmesser auf. So wird eine einfache Zustellung des dritten Fräswerkzeugs zum Bündigfräsen zum Werkstück ermöglicht, da die Koaxialachse der Vorrichtung in dieser bevorzugten Ausgestaltung beim Bündigfräsen parallel zur Werkstückoberfläche angeordnet sein kann. Auch ist eine gute Bearbeitungsqualität erzielbar, da alle Punkte auf der Umfangsfläche des Werkzeugs die gleiche Geschwindigkeit aufweisen. Ferner führt diese Ausgestaltung zu einer günstigen Vorrichtung mit einem einfachen Aufbau.

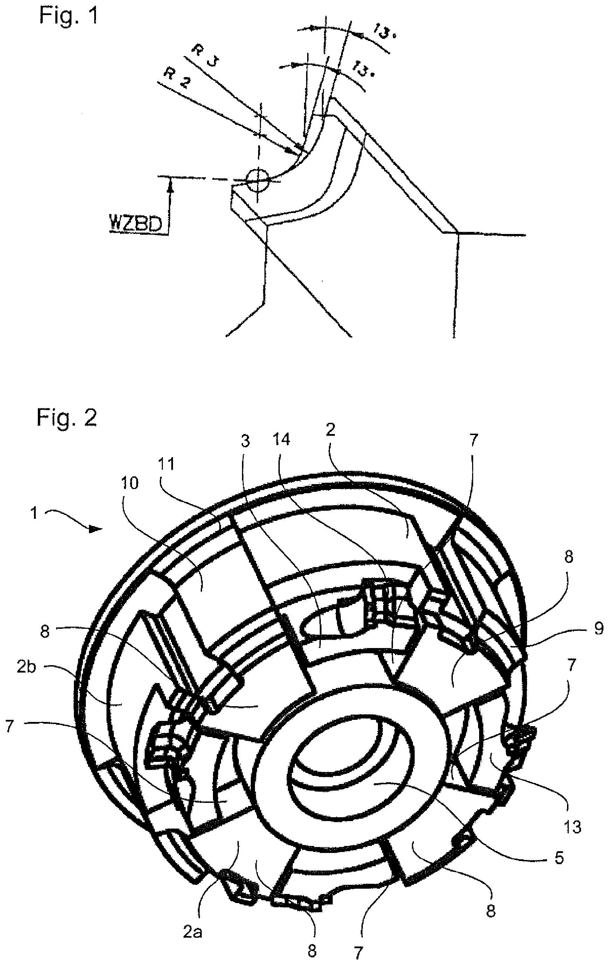

Die Vorrichtung kann derart ausgestaltet sein, dass die Werkzeugbasisdurchmesser von erstem und zweitem Fräswerkzeug einander entsprechen. Im Rahmen der vorliegenden Erfindung wird unter dem Werkzeugbasisdurchmesser dabei der Durchmesser eines Werkzeugs verstanden, bei dem auf der Außenfläche des Werkzeugs eine werkzeugspezifische Werkzeugausgestaltung beginnt. Bezugnehmend auf das exemplarisch gezeigte Werkzeug in der beigefügten Fig. 1, beläuft sich der Werkzeugbasisdurchmesser auf den Werkzeugdurchmesser an dem Punkt auf der Werkzeugaußenkontur, bei dem der für das Fräswerkzeug charakteristische Radius für die Konturbearbeitung beginnt. Der tangentiale Auslaufbereich des Werkzeugs zwischen dem Startpunkt dieser werkzeugspezifischen Ausgestaltung und dem Eckpunkt des Werkzeugs ist bei diesen hier gezeigten Werkzeugen gleich und daher nicht werkzeugspezifisch. Mit anderen Worten handelt es sich bei dem Werkzeugbasisdurchmesser um eine Bezugsgröße zum Werkstück, die angibt, in welchem Abstand von einer Werkstückoberfläche die Werkzeugachse angeordnet werden muss, um eine gewünschte Bearbeitung zu erzielen. Der Werkzeugbasisdurchmesser ist daher der Wirkdurchmesser.

Diese bevorzugte Ausgestaltung führt im Betrieb der Vorrichtung zu der Wirkung, dass ohne Änderung der Lage und Austausch der Bearbeitungsvorrichtung lediglich durch die Verstellbewegung des beweglichen zweiten Fräswerkzeugs an einem Werkstück zwei unterschiedliche Konturbearbeitungen, insbesondere Radien und/oder Fasen, realisiert werden können. Somit wird mit lediglich einer Tastrolle, die das Werkzeug mit einem vorbestimmten Abstand zu dem Werkstück zustellt, und damit die Bezugsgröße zum Werkstück bildet, eine erste und eine zweite Konturbearbeitung ermöglicht. Die mindestens zwei Konturen können dabei schnell durch die Verstellung umgerüstet werden, was zu geringeren Fertigungszeiten und damit niedrigen Fertigungskosten führt. Ferner führt diese Ausgestaltung auch zu geringeren Rüstzeiten.

Gemäß der Erfindung ist der Werkzeugbasisdurchmesser des ersten und/oder zweiten Fräswerkzeugs kleiner als der Werkzeugbasisdurchmesser des dritten Fräswerkzeugs. Dies führt zu einer gut handhabbaren Vorrichtung, da das zum Bündigfräsen erforderliche dritte Fräswerkzeug bei der Werkzeugzustellung zum Werkstück als erstes mit dem Werkstück in Eingriff bringbar ist.

Ferner kann die Vorrichtung ein viertes Fräswerkzeug zur Konturbearbeitung an einer an das Werkstück angebrachten Kante aufweisen. Dieses vierte Fräswerkzeug weist bevorzugt einen Werkzeugbasisdurchmesser auf, der gleich dem Werkzeugbasisdurchmesser des dritten Fräswerkzeugs ist. Mit dieser bevorzugten Ausgestaltung können auf einer Vorrichtung drei verschiedene Konturbearbeitungen bereitgestellt werden, wobei darüber hinaus eine gleichzeitige Bündig- und Konturbearbeitung ermöglicht wird. Wie zuvor beschrieben, ermöglicht dies eine effiziente Werkstückbearbeitung und verringert damit die Fertigungskosten.

Das dritte und vierte Fräswerkzeug können dabei als ein Bauteil ausgestaltet sein. Diese bevorzugte Ausgestaltung führt zu einer Vorrichtung, die eine geringe Komplexität aufweist, da lediglich eine Werkzeugaufhängung bzw. Lagerung für zwei Werkzeuge erforderlich ist. Ferner wird bei der gleichzeitigen Bündigfräs- und Konturbearbeitung das Erzielen einer guten Bearbeitungsqualität ermöglicht, da zwischen den gleichzeitig sich in Eingriff befindenden Werkzeugen keine Relativverschiebungen stattfinden.

In einer bevorzugten Ausführungsform sind die Fräswerkzeuge dabei entsprechend ihrer Nummerierung hintereinander angeordnet. Diese Ausgestaltung führt zu einer besonders einfach aufgebauten Vorrichtung, da die Werkzeuge zur Konturbearbeitung jeweils am vorderen bzw. hinteren Ende des Bündigfräswerkzeugs angeordnet sind, wodurch eine einfache Zustellung der einzelnen Fräswerkzeuge zum Werkstück ermöglicht und ausreichend Raum für die Anordnung der Werkzeuglagerungen bereitgestellt wird.

Das erste und dritte Fräswerkzeug können als ein Bauteil ausgebildet sein, was zu den gleichen Vorteilen, wie jene, die zuvor im Hinblick auf das dritte und vierte Fräswerkzeug beschrieben wurden, führt.

Auch kann das dritte Fräswerkzeug als ein Bauteil mit dem zweiten Fräswerkzeug ausgebildet sein, was zu gleichen Vorteilen führt und darüber hinaus einen Wechsel zwischen Planfräs- und Konturbearbeitung über den Verstellmechanismus des zweiten Fräswerkzeugs ermöglicht.

In einer weiteren bevorzugten Ausführungsform weist die Vorrichtung ferner eine Verstelleinrichtung zum Verschieben von zumindest einem der Fräswerkzeuge in die Koaxialachsenrichtung der Vorrichtung auf. Bevorzugt lassen sich mit dieser Verstelleinrichtung alle Fräswerkzeuge in die Koaxialachsenrichtung der Vorrichtung verstellen. In dieser bevorzugten Ausführungsform ist daher ein einfacher Wechsel zwischen den unterschiedlichen auf der erfindungsgemäßen Vorrichtung bereitgestellten Bearbeitungsmöglichkeiten, das heißt zwischen unterschiedlichen Konturbearbeitungen und der Planfräsbearbeitung, möglich. Die Verstelleinrichtung kann optional auch in eine oder mehrere, bevorzugt senkrecht zur Koaxialachsenrichtung der Vorrichtung, angeordnete Richtungen verstellbar sein.

In einer weiteren Zielsetzung stellt die vorliegende Erfindung ein Verfahren zum Bearbeiten eines Werkstücks, das bevorzugt zumindest abschnittsweise aus Holz, Holwerkstoffen, Kunststoff oder dergleichen besteht unter Verwendung einer Vorrichtung gemäß einer der zuvor beschriebenen Ausführungsformen bereit. Dieses Verfahren umfasst dabei den Schritt des Bündigfräsens einer Schmalseite einer an das Werkstück angebrachten Kante mit dem dritten Fräswerkzeug, den Schritt des Konturbearbeitens einer an das Werkstück angebrachten Kante mit dem ersten Fräswerkzeug, wobei sich das zweite Fräswerkzeug in der Ruhestellung befindet, den Schritt des Verstellens des zweiten Fräswerkzeugs in die Bearbeitungsstellung, und den Schritt des Konturbearbeitens einer an das Werkstück angebrachten Kante mit dem zweiten Fräswerkzeug. Das Verfahren führt dabei zu den gleichen Vorteilen, wie sie zuvor hinsichtlich der Vorrichtung aufgeführt wurden.

Bevorzugt weist das Verfahren dabei ferner den Schritt des Konturbearbeitens einer an das Werkstück angebrachten Kante mit dem vierten Fräswerkzeug auf, wobei die Konturbearbeitung bevorzugt zumindest zeitweise gleichzeitig mit dem Bündigfräsen der Schmalseite durch das dritte Fräswerkzeug erfolgt. Diese bevorzugte Ausführungsform führt dabei zu einer besonders zeiteffizienten und damit kostengünstigen Bearbeitung.

### KURZE BESCHREIBUNG DER ZEICHNUNGEN

Fig. 1 ist eine Ansicht zum Illustrieren des Werkzeugbasisdurchmessers an einem exemplarischen Werkzeug.
Fig. 2 ist eine isometrische Ansicht der Vorrichtung gemäß einer bevorzugten Ausführungsform der vorliegenden Erfindung.
Fig. 3 ist eine Querschnittsansicht der Vorrichtung gemäß der bevorzugten Ausführungsform der vorliegenden Erfindung, in der hauptsächlich das erste, dritte und vierte Fräswerkzeug zu sehen ist.
Fig. 4 ist eine Querschnittsansicht der Vorrichtung gemäß der bevorzugten Ausführungsform der vorliegenden Erfindung, in der hauptsächlich das zweite Fräswerkzeug zu sehen ist.
Fig. 5a zeigt eine Bündigfräsbearbeitung durch das dritte Fräswerkzeug mit zusätzlicher Konturbearbeitung durch das vierte Fräswerkzeug und Fig. 5b eine Bündigfräsbearbeitung durch das dritte Fräswerkzeug eines Werkstücks mit der bevorzugten Ausführungsform der Vorrichtung der vorliegenden Erfindung.
Fig. 6a zeigt eine Konturbearbeitung durch das erste Fräswerkzeug, bei der sich das zweite Fräswerkzeug in der Ruhestellung befindet, und Fig. 6b eine Konturbearbeitung durch das zweite Fräswerkzeug, welches sich in der Bearbeitungsstellung befindet, eines Werkstücks mit der bevorzugten Ausführungsform der Vorrichtung der vorliegenden Erfindung.

### DETAILLIERTE BESCHREIBUNG EINER BEVORZUGTEN AUSFÜHRUNGSFORM

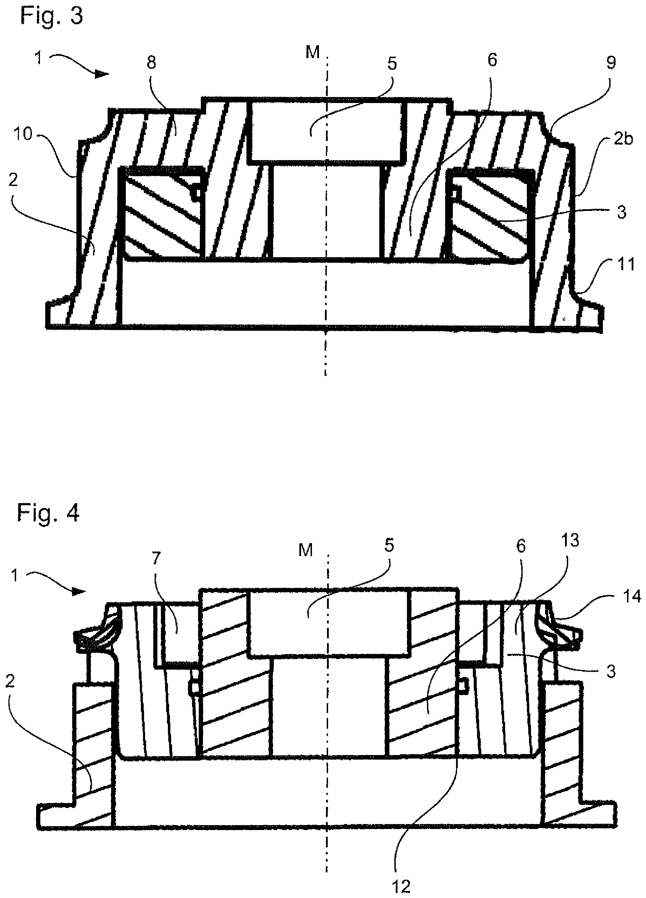

Im Folgenden wird eine bevorzugte Ausführungsform der vorliegenden Erfindung unter Bezugnahme auf Figuren 2 bis 6 im Detail beschrieben.

Die nachfolgend beschriebene bevorzugte Ausführungsform der erfindungsgemäßen Vorrichtung dient bevorzugt dem Bearbeiten einer an einem Werkstück angebrachten Kante. Das Werkstück besteht dabei bevorzugt zumindest abschnittsweise aus Holz, Holzwerkstoffen, Kunststoff oder dergleichen. Dabei kann es sich beispielsweise um eine Massivholz- oder Spanplatte, eine Leichtbauplatte, eine Sandwichplatte oder dergleichen handeln, wie sie beispielsweise im Bereich der Möbel- und Bauelementeindustrie zum Einsatz kommen.

Die angebrachte Kante ist bevorzugt ein Kantenband, welches aus unterschiedlichen Materialien, wie beispielsweise Kunststofffurnier, Papier, Pappe, Metall etc. und vielfältigen Kombinationen hiervon bestehen kann. Dabei wird das Kantenband bevorzugt in einer Rollenform vorgesehen, kann aber beispielsweise auch in Form von Einzelabschnitten bereitgestellt werden. Ferner kann das Kantenband eine Funktionsschicht aufweisen, die durch Energieeintrag (beispielsweise Erwärmung oder Laserstrahlung) haftende Eigenschaften entfaltet, sodass das Kantenband an ein Werkstück über die Funktionsschicht gefügt werden kann.

Die Vorrichtung 1 der vorliegenden bevorzugten Ausführungsform weist im Wesentlichen drei Bauteile, nämlich einen Werkzeuggrundträger 2, einen Werkzeugverstellträger 3, sowie eine Verstelleinrichtung 4 auf.

Der Werkzeuggrundträger 2 weist im Wesentlichen eine Becherform, also eine Hohlzylinderform mit einer geschlossenen 2a und einer offenen Endfläche auf. Der Grundträger 2 dieser bevorzugten Ausführungsform weist dabei in dessen geschlossenen Endfläche 2a eine mittig angeordnete gesenkte Bohrung 5 auf. Die Bohrung 5 erstreckt sich durch die geschlossene Endfläche 2a des Grundträgers 2 und eine in das Grundträgerinnere 2 auskragende Hervorstehung 6 hindurch. Die Hervorstehung 6 ist achsensymmetrisch zur Mittelachse M des Grundträgers 2 ausgebildet, erstreckt sich von der Innenfläche der Endfläche 2a bis etwa zur Hälfte der Grundträgerlänge und weist einen Außendurchmesser auf, der in etwa der Hälfte des Außendurchmessers der Mantelfläche des Werkzeuggrundträgers 2 entspricht.

Auf der geschlossenen Endfläche 2a des Grundträgers 2 befinden sich darüber hinaus bevorzugt vier gleichwinklig auf der Fläche verteilte Aussparungen 7, die sich von etwa der Hälfte des maximalen Radius der Endfläche 2a bis zum maximalen Radius der Endfläche 2a und in Richtung der Mittelachse M des Werkzeuggrundträgers 2 bis etwa zur Hälfte der Grundträgerlänge in die Mantelfläche hinein erstrecken. Bevorzugt entspricht dabei der Radius, bei der die Aussparungen 7 auf der geschlossenen Endfläche 2a beginnen, dem Außenradius der Hervorstehung 6. Aufgrund der zuvor beschriebenen Becherform des Werkzeuggrundträgers 2, weist der Träger damit vier an der geschlossenen End- und vorderen Mantelfläche angeordnete Öffnungen 7 auf. Die Öffnungen 7 umfassen dabei bevorzugt jeweils etwa 45° der Endfläche 2a des Grundträgers 2, wobei zwischen den einzelnen Öffnungen 7 jeweils ein etwa 45° einnehmender Steg 8 vorliegt.

Die Mantelfläche 2b des Werkzeuggrundträgers 2 besteht dabei aus drei wesentlichen Abschnitten. Von der geschlossenen Endfläche 2a in Richtung der Mittelachse M des Grundträgers 2 aus, weist der Grundträger 2 als Erstes ein erstes Fräswerkzeug 9 zur Konturbearbeitung einer Werkstückkante auf. In dieser bevorzugten Ausführungsform ist das erste Fräswerkzeug 9 als ein Werkzeug zum Erzeugen eines Radius an einer Werkstückkante ausgestaltet, wobei hier beliebige andere Werkzeuge zur Konturbearbeitung, beispielsweise ein Werkzeug zum Erzeugen einer Fase, denkbar sind. Das erste Fräswerkzeug 9 ist dabei im vordersten Bereich der Stege 8 ausgebildet, wobei sich dieses bevorzugt in Umfangsrichtung nur entlang eines Teils der jeweiligen Stege 8 erstreckt. In der vorliegenden Ausführungsform sind dabei Endbereiche der Stege 8 jeweils radial leicht erhöht gegenüber der unmittelbaren Umgebung ausgebildet, sodass diese Erhöhungen als Schneiden fungieren. Die Schneiden sind dabei nachschärfbar ausgebildet. Alternativ ist auch das Vorsehen von Schneidplatten möglich. Diese Ausbildung der Schneiden gilt auch für die im Folgenden beschrieben Fräswerkzeuge.

In Richtung der Mittelachse M weist der Werkzeuggrundträger 2 anschließend an das erste Fräswerkzeug 9, einen zweiten Abschnitt auf der Mantelfläche 2b mit einem dritten Fräswerkzeug 10 zum Bündigfräsen einer Schmalseite einer an ein Werkstück angebrachten Kante auf. Der Außendurchmesser des Grundträgers 2 ist im Bereich dieses dritten Fräswerkzeuges 10 bevorzugt konstant. Es wird darauf hingewiesen, dass hier auch andere Ausgestaltungen für das dritte Werkzeug 10 denkbar sind, die jedoch zum Bündigfräsen einer Schmalseite einer an ein Werkstück angebrachten Kante geeignet zu sein haben. Beispielsweise kann die Mantelfläche mit einem Winkel gegenüber der Mittelachse M des Grundträgers 2 angeordnet sein.

In Richtung der Mittelachse M weist der Grundträger 2 anschließend an das dritte Fräswerkzeug 10 ein viertes Fräswerkzeug 11 zum Konturbearbeiten einer an ein Werkstück angebrachten Kante auf. Dabei ist der Außendurchmesser des vierten Fräswerkzeugs 11 bevorzugt größer als der Außendurchmesser des dritten Fräswerkzeugs 10. Der Werkzeugbasisdurchmesser des vierten Fräswerkzeugs 11, also der Durchmesser, bei dem der Radius des Werkzeugs beginnt, entspricht dabei dem Werkzeugbasisdurchmesser des dritten Fräswerkzeugs 10, also dem Außendurchmesser. Der Werkzeugbasisdurchmesser des ersten Fräswerkzeugs 9 ist in dieser bevorzugten Ausführungsform kleiner als der Werkzeugbasisdurchmesser des dritten 10 und vierten Fräswerkzeugs 11 ausgebildet.

Darüber hinaus weist die Vorrichtung 1 den Werkzeugverstellträger 3 auf. Der Verstellträger 3 ist achsensymmetrisch ausgebildet und weist im Wesentlichen einen Außendurchmesser auf, welcher in etwa dem Innendurchmesser des Werkzeuggrundträgers 2 entspricht. Ferner weist der Werkzeugverstellträger 3 eine mittig angeordnete Bohrung 12 mit einem Durchmesser auf, welcher in etwa dem Außendurchmesser der Hervorstehung 6 des Werkzeuggrundträgers 2 entspricht. Dabei ist der Werkzeugverstellträger 3 in den Grundträger 2 so eingesetzt, dass dieser durch die Hervorstehung 6 und die Innenfläche des Grundträgers 2 geführt in Richtung der Mittelachse M verschiebbar ist.

Ferner weist der Verstellträger 3 an einer der Stirnseiten in dieser Ausführungsform vier Auskragungen 13 auf, die so ausgestaltet sind, dass diese in die Aussparungen 7 des Grundträgers 2 passen. Im vorderen Bereich der Auskragungen 13 ist ein zweites Fräswerkzeug 14 zum Konturbearbeiten einer an das Werkstück angebrachten Kante angebracht. In dieser bevorzugten Ausführungsform ist dieses zweite Fräswerkzeug 14 lediglich in einem Teilbereich der Auskragung 13 ausgebildet, wobei die folgende Erfindung nicht hierauf beschränkt ist. In dieser bevorzugten Ausführungsform ist das zweite Fräswerkzeug 14 ein Werkzeug zum Versehen einer Werkstückkante mit einem Radius oder Fase. Der bereitgestellte Radius des zweiten Fräswerkzeugs 14 ist dabei bevorzugt verschieden von dem durch das erste Fräswerkzeugs 9 bereitgestellten Radius. Der Werkzeughauptdurchmesser des zweiten Fräswerkzeugs 14 ist dabei in dieser bevorzugten Ausführungsform gleich dem Werkzeughauptdurchmesser des ersten Fräswerkzeugs 9. Durch eine Verstellbewegung des Verstellträgers 3 in Richtung der Mittelachse M kann daher zwischen einem Eingriff des ersten Fräswerkzeugs 9 und einem Eingriff des zweiten Fräswerkzeugs 14 mit dem zu bearbeitenden Werkstück gewechselt werden. Mögliche detailliertere Ausgestaltungen dieses Teils der Vorrichtung 1 sind der Patentschrift DE 199 15 672 C2 zu entnehmen.

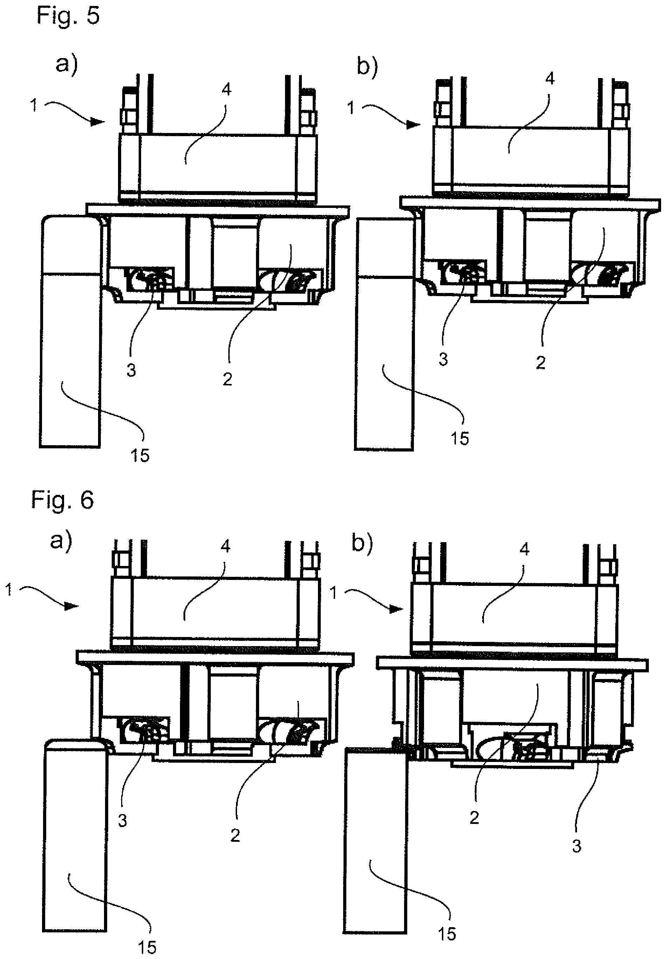

Figuren 5 und 6 zeigen unterschiedliche Bearbeitungsvorgänge, die mit der Vorrichtung 1 der zuvor beschriebenen bevorzugten Ausführungsform möglich sind. So ist in Figur 5a ein Bearbeitungsvorgang gezeigt, bei dem eine Schmalseite einer an ein Werkstück 15 angebrachten Kante mit dem dritten Fräswerkzeug 10 bündig gefräst und gleichzeitig mit dem vierten Fräswerkzeug 11 die Kante konturbearbeitet wird, hier mit einem Radius versehen wird. Wie in Figur 5b gezeigt, ist jedoch mit der vorliegenden Vorrichtung 1 auch ein reines Bündigfräsen der Schmalseite des Werkstücks 15 mit dem dritten Fräswerkzeug 10 möglich. Hierzu wird die Vorrichtung 1 über die Verstelleinrichtung 4 relativ zu dem Werkstück 15 in Richtung der Mittelachse M so verstellt, dass lediglich das dritte Fräswerkzeug 10 mit dem Werkstück 15 im Eingriff ist. Figur 6a zeigt einen weiteren Bearbeitungsvorgang, bei dem das erste Fräswerkzeug 9 an dem Werkstück 15 eine Konturbearbeitung, hier eine Radiusbearbeitung, durchführt. Bei diesem Bearbeitungsvorgang befindet sich der Verstellträger 3, also das zweite Fräswerkzeug 14, in der Ruhestellung, sodass lediglich das erste Fräswerkzeug 9 mit dem Werkstück 15 im Eingriff ist. Der Verstellvorgang von dem in Figur 5b gezeigten Bearbeitungsvorgang zu dem in Figur 6a gezeigten Bearbeitungsvorgang, erfolgt über die Verstelleinrichtung 4, welche die Vorrichtung 1 in Richtung der Mittelachse M verstellt. Figur 6b zeigt einen weiteren Bearbeitungsvorgang, bei dem eine Werkstückkante des Werkstücks 15 mit dem zweiten Fräswerkzeug 14 konturbearbeitet, hier radiusbearbeitet, wird. Dafür wird die Verstellträger 3, das heißt das zweite Fräswerkzeug 14, in die Bearbeitungsstellung verstellt, sodass das zweite Fräswerkzeug 14 mit dem Werkstück in Eingriff bringbar ist. Die Verstellung des Verstellträgers 3 und/oder der gesamten Vorrichtung 1 über die Verstelleinrichtung 4 kann dabei elektrisch, hydraulisch, pneumatisch oder auf beliebige andere Weise erfolgen. Ebenso ist es denkbar, dass die Verstelleinrichtung 4 die Vorrichtung 1 nicht nur in Richtung der Mittelachse 4, sondern auch in weitere Richtungen, die bevorzugt senkrecht zur Mittelachse M angeordnet sind, verstellen kann.

## Patentansprüche

1. Vorrichtung (1) zum Bearbeiten eines Werkstücks (15), das bevorzugt zumindest abschnittsweise aus Holz, Holzwerkstoffen, Kunststoff oder dergleichen besteht, mit:
einem ersten Fräswerkzeug (9) für eine Konturbearbeitung einer an das Werkstück (15) angebrachten Kante,
einem zweiten Fräswerkzeug (14) für eine Konturbearbeitung einer an das Werkstück (15) angebrachten Kante, das gegenüber dem ersten Fräswerkzeug (9) zwischen einer Ruhestellung, in der das erste Fräswerkzeug (9) mit einem Werkstück (15) in Eingriff bringbar ist, und einer Bearbeitungsstellung, in der das zweite Fräswerkzeug (14) mit einem Werkstück (15) in Eingriff bringbar ist, verstellbar ist,
**dadurch gekennzeichnet, dass** die Vorrichtung (1) ferner aufweist
ein drittes Fräswerkzeug (10) zum Bündigfräsen einer Schmalseite einer an das Werkstück (15) angebrachten Kante, wobei
die drei Fräswerkzeuge (9; 10; 14) koaxial zueinander angeordnet sind und alle gemeinsam über eine Einrichtung antreibbar sind, wobei
der Werkzeugbasisdurchmesser des ersten (9) und zweiten Fräswerkzeugs (14) kleiner als der Werkzeugbasisdurchmesser des dritten Fräswerkzeugs (10) ist.

2. Vorrichtung (1) nach Anspruch 1, bei der die Umfangsfläche des dritten Fräswerkzeugs (10) einen konstanten Durchmesser aufweist.

3. Vorrichtung (1) nach Anspruch 1 oder 2, bei der die Werkzeugbasisdurchmesser von erstem (9) und zweitem Fräswerkzeug (14) einander entsprechen.

4. Vorrichtung (1) nach einem der vorhergehenden Ansprüche, bei der die Vorrichtung (1) ferner ein viertes Fräswerkzeug (11) zur Konturbearbeitung einer an das Werkstück (15) angebrachten Kante mit bevorzugt einem Werkzeugbasisdurchmesser aufweist, der gleich dem Werkzeugbasisdurchmesser des dritten Fräswerkzeugs (10) ist.

5. Vorrichtung (1) nach Anspruch 4, bei der das dritte (10) und vierte Fräswerkzeug (11) als ein Bauteil ausgebildet sind.

6. Vorrichtung (1) nach einem der vorhergehenden Ansprüche, bei der die Fräswerkzeuge (9; 10; 14) ihrer Nummerierung entsprechend hintereinander angeordnet sind.

7. Vorrichtung (1) nach einem der vorhergehenden Ansprüche, bei der das erste (9) und dritte Fräswerkzeug (10) als ein Bauteil ausgebildet sind.

8. Vorrichtung (1) nach einem der Ansprüche 1 bis 6, bei der das dritte (10) und zweite Fräswerkzeug (14) als ein Bauteil ausgebildet sind.

9. Vorrichtung (1) nach einem der vorhergehenden Ansprüche mit ferner einer Verstelleinrichtung (4) zum Verschieben von zumindest einem der Fräswerkzeuge (9; 10; 14), bevorzugt allen Fräswerkzeugen, in die Koaxialachsenrichtung (M) der Vorrichtung (1).

10. Verfahren zum Bearbeitung eines Werkstücks (15), das bevorzugt zumindest abschnittsweise aus Holz, Holzwerkstoffen, Kunststoff oder dergleichen besteht, unter Verwendung einer Vorrichtung (1) nach einem der Ansprüche 1 bis 11 mit den Schritten
Bündigfräsen einer Schmalseite einer an das Werkstück (15) angebrachten Kante mit dem dritten Fräswerkzeug (10),
Konturbearbeiten einer an das Werkstück (15) angebrachten Kante mit dem ersten Fräswerkzeug (9), wobei sich das zweite Fräswerkzeug (14) in der Ruhestellung befindet,
Verstellen des zweiten Fräswerkzeugs (14) in die Bearbeitungsstellung,
Konturbearbeiten einer an das Werkstück (15) angebrachten Kante mit dem zweiten Fräswerkzeug (14).

11. Verfahren nach Anspruch 10 mit ferner dem Schritt Konturbearbeiten einer an das Werkstück (15) angebrachten Kante mit dem vierten Fräswerkzeug (11), wobei die Konturbearbeitung bevorzugt zumindest zeitweise gleichzeitig mit dem Bündigfräsen der Schmalseite durch das dritte Fräswerkzeug (10) erfolgt.

## Claims

1. Device (1) for machining a workpiece (15) of which at least a portion or portions are preferably of wood, engineered wood, plastics materials or the like, having:
a first milling tool (9) for machining the contour of an edging fixed to the workpiece (15),
and having a second milling tool (14) for machining the contour of an edging fixed to the workpiece (15), which second milling tool (14) is adjustable, relative to the first milling tool (9), between a rest position in which the first milling tool (9) can be brought into engagement with a workpiece (15) and a machining position in which the second milling tool (14) can be brought into engagement with a workpiece (15),
**characterised in that** the device (1) also has
a third milling tool (10) for machining flush a narrow side of an edging fixed to the workpiece (15),
the three milling tools (9; 10; 14) being arranged coaxially to one another and all being drivable in unison by means of an arrangement,
the basic diameters of the first (9) and second milling tools (14) being less than the basic diameter of the third milling tool (10).

2. Device (1) according to claim 1, wherein the circumferential surface of the third milling tool (10) is of a constant diameter.

3. Device (1) according to claim 1 or 2, wherein the basic diameters of the first (9) and second milling tools (14) correspond to one another.

4. Device (1) according to one of the preceding claims, wherein the device (1) also has a fourth milling tool (11) for machining the contour of an edging fixed to the workpiece (15), the basic diameter of which fourth milling tool (11) is preferably the same as that of the third milling tool (10).

5. Device (1) according to claim 4, wherein the third (10) and fourth milling tools (11) form one component.

6. Device (1) according to one of the preceding claims, wherein the milling tools (9; 10; 14) are arranged one behind the other in the order in which they are numbered.

7. Device (1) according to one of the preceding claims, wherein the first (9) and third milling tools (10) form one component.

8. Device (1) according to one of claims 1 to 6, wherein the third (10) and second milling tools (14) form one component.

9. Device (1) according to one of the preceding claims also having an adjusting means (4) for displacing at least one of the milling tools (9; 10; 14), and preferably all the milling tools, in the co-axial direction (M) of the device (1).

10. Method of machining a workpiece (15) of which at least a portion or portions are preferably of wood, engineered wood, plastics materials or the like, using a device (1) according to one of claims 1 to 11, having the steps of
milling flush a narrow side of an edging fixed to the workpiece (15) with the third milling tool (10),
machining the contour of an edging fixed to the workpiece (15) with the first milling tool (9) with the second milling tool (14) in the rest position,
adjusting the second milling tool (14) to the machining position, and
machining the contour of an edging fixed to the workpiece (15) with the second milling tool (14).

11. Method according to claim 10 also having the step of
machining the contour of an edging fixed to the workpiece (15) with the fourth milling tool (11), the machining of the contour preferably taking place, at times, simultaneously with the milling flush of the narrow side by the third milling tool (10).

## Revendications

1. Dispositif (1) pour l'usinage d'une pièce (15), qui est constituée de préférence au moins partiellement de bois, de dérivés de bois, de plastique ou analogues, avec :
un premier outil de fraisage (9) pour un usinage de contour d'une arête réalisée au niveau de la pièce (15),
un deuxième outil de fraisage (14) pour un usinage de contour d'une arête réalisée au niveau de la pièce (15), lequel deuxième outil de fraisage peut être déplacé par rapport au premier outil de fraisage (9) entre une position de repos, dans laquelle le premier outil de fraisage (9) peut être mis en prise avec une pièce (15), et une position d'usinage, dans laquelle le deuxième outil de fraisage (14) peut être mis en prise avec une pièce (15),
**caractérisé en ce que** le dispositif (1) comporte en outre :
un troisième outil de fraisage (10) pour l'affleurage d'un côté étroit d'une arête réalisée au niveau de la pièce (15),
les trois outils de fraisage (9 ; 10 ; 14) sont agencés de façon coaxiale les uns par rapport aux autres et ils peuvent être entraînés tous ensemble par l'intermédiaire d'un système,
dans lequel le diamètre de base d'outil du premier (9) et du deuxième outil de fraisage (14) est inférieur au diamètre de base d'outil du troisième outil de fraisage (10).

2. Dispositif (1) selon la revendication 1, dans lequel la surface périphérique du troisième outil de fraisage (10) comporte un diamètre constant.

3. Dispositif (1) selon la revendication 1 ou 2, dans lequel le diamètre de base d'outil du premier (9) et du deuxième outil de fraisage (14) correspondent l'un à l'autre.

4. Dispositif (1) selon l'une quelconque des revendications précédentes, dans lequel le dispositif (1) comporte en outre un quatrième outil de fraisage (11) destiné à l'usinage de contour d'une arête réalisée au niveau de la pièce (15) avec de préférence un diamètre de base d'outil qui est égal au diamètre de base d'outil du troisième outil de fraisage (10).

5. Dispositif (1) selon la revendication 4, dans lequel le troisième (10) et le quatrième outil de fraisage (11) sont réalisés comme un seul élément.

6. Dispositif (1) selon l'une quelconque des revendications précédentes, dans lequel les outils de fraisage (9 ; 10 ; 14) sont agencés les uns derrière les autres conformément à leur numérotation.

7. Dispositif (1) selon l'une quelconque des revendications précédentes, dans lequel le premier (9) et le troisième (10) outil de fraisage sont réalisés comme un seul élément.

8. Dispositif (1) selon l'une quelconque des revendications précédentes 1 à 6, dans lequel le troisième (10) et le deuxième (14) outil de fraisage sont réalisés comme un seul élément.

9. Dispositif (1) selon l'une quelconque des revendications précédentes, avec en outre un dispositif de déplacement (4) pour déplacer au moins un des outils de fraisage (9 ; 10 ; 14), de préférence tous les outils de fraisage, dans la direction d'axes coaxiaux (M) du dispositif (1).

10. Procédé d'usinage d'une pièce (15), qui est constituée de préférence au moins partiellement de bois, de dérivés de bois, de plastique ou similaire, utilisant un dispositif (1) selon l'une quelconque des revendications 1 à 11, avec les étapes :
fraisage affleurant d'un côté étroit d'une arête, réalisée au niveau de la pièce (15), avec le troisième outil de fraisage (10),
usinage de contour d'une arête, réalisée au niveau de la pièce (15), avec le premier outil de fraisage (9), le deuxième outil de fraisage (14) se trouvant alors dans la position de repos,
déplacement du deuxième outil de fraisage (14) dans la position d'usinage,
usinage de contour d'une arête, réalisée au niveau de la pièce (15), avec le deuxième outil de fraisage (14).

11. Procédé selon la revendication 10, avec en outre l'étape :
usinage de contour d'une arête, réalisée au niveau de la pièce (15), avec le quatrième outil de fraisage (11), lequel usinage de contour s'effectue de préférence au moins de manière intermittente simultanément avec le fraisage affleurant du côté étroit par le troisième outil de fraisage (10).
